## Europäisches Patentamt
## European Patent Office
## Office européen des brevets

(11) Veröffentlichungsnummer: **0 252 221**
**B1**

(12) **EUROPÄISCHE PATENTSCHRIFT**

(45) Veröffentlichungstag der Patentschrift: 22.08.90

(21) Anmeldenummer: 87105303.9

(22) Anmeldetag: 09.04.87

(51) Int. Cl.⁵: **B 61 D 17/22,** B 62 D 47/02, B 60 D 5/00

(54) Übergangsschutz zwischen Fahrzeugen.

(30) Priorität: 12.04.86 DE 3612425
23.05.86 DE 3617325

(43) Veröffentlichungstag der Anmeldung:
13.01.88 Patentblatt 88/02

(45) Bekanntmachung des Hinweises auf die
Patenterteilung:
22.08.90 Patentblatt 90/34

(84) Benannte Vertragsstaaten:
AT BE CH DE ES FR GB GR IT LI NL SE

(56) Entgegenhaltungen:
AT-B- 346 899
DE-A-2 232 279
DE-A-3 019 896
DE-B-1 071 740
FR-A-2 084 443

(73) Patentinhaber: HÜBNER Gummi- und Kunststoff
GmbH
Agathofstrasse 15
D-3500 Kassel-Bettenhausen 1 (DE)

(72) Erfinder: Hübner, Reinhard, Dipl.-Ing.
Agathofstrasse 15
D-3500 Kassel-Bettenhausen 1 (DE)
Erfinder: Koch, Robert
Schlesierstrasse 2
D-3437 Bad Sooden-Allendorf (DE)

(74) Vertreter: Walter, Helmut
Aubingerstrasse 81
D-8000 München 60 (DE)

Courier Press, Leamington Spa, England.

**Beschreibung**

Um den Übergangsbereich zwischen zwei gelenkig miteinander gekuppelten Schienen- bzw. Straßenfahrzeugen gegenüber Wetterunbilden, Fahrtwind, Staub, u.a. zu schützen sind an sich zwei grundsätzlich voneinander verschiedene Schutzvorrichtungen bekannt. Zum einen sind Faltenbälge bekannt, bei denen ein in sich biegbares aber nicht dehnbares Gewebe beiderseits mit einer Gummierung versehen ist -bzw. dieses Gewebe in eine solche Masse eingelegt ist- und derartige Materialbahnen in Falten gelegt sind, deren Seitenflächen einen veränderbaren Winkel einschließen, so daß der Balg gelängt und verkürzt werden kann. Aus drei bzw. vier derartigen gefalteten Materialbahnen wird dann ein Tunnel (drei Seiten) oder eine Röhre (vier Seiten) gefertigt, der bzw. die an seinen bzw. ihren Enden an den gegeneinander beweglichen Fahrzeugenden befestigt sind und so die Übergangsbrücke umgeben, ohne die Bewegungen der Fahrzeugenden relativ zueinander wesentlich zu behindern.

Zum anderen mal werden entsprechende Materialbahnen zu an ihren Enden offenen Röhren gebogen, und an den beiden einander zugehörigen Fahrzeugenden wird aus einer oberen horizontalen und zwei seitlichen vertikalen Röhren ein Tunnelabschnitt angesetzt. Bie miteinander gekuppelten Fahrzeugen liegen die beiden Tunnelabschnitte etwa in Linienberührung aneinander, um wiederum zwischen beiden Fahrzeugen einen die Übergangsbrücke umgebenden Tunnel zu bilden, die die Relativbewegungen zwischen beiden Fahrzeugen nur unwesentlich beeinträchtigt. Durch Bemessung der radialen Vorspannung in den Röhren beider Tunnelabschnitte wird ein zu großer Anpreßdruck zwischen beiden Abschnitten vermieden, der ein zu großes Abweichen von der Linienberührung zur Folge hätte, andererseits beim Durchfahren von Kurven eine solche radiale Drehung der kurvenäußeren Röhren bzw. Wülste und der zugehörigen Teile der oberen Röhren bzw. Wülste möglich macht, daß sich die Wülste nicht zu weit voneinander entfernen und der Fahrtwind und dergleichen ins Tunnelinnere gelangen kann. Bei einem entsprechend großen Versatz der Fahrzeuge relativ zueinander gleiten die Wülste beider Tunnelabschnitte aufeinander, was Anlaß dafür ist, daß im Berührungsbereich nicht zu weit von der Linienberührung abgewichen werden soll. Die Wülste gleiten bei einem seitlichen Versatz der Fahrzeuge relativ zueinander insbesondere im Bereich des Daches.

Beide Versionen des Übergangsschutzes haben heute ihre festen Anwendungsgebiete, werden den Bedürfnissen beider Anwendungsgebiete entsprechend entwickelt und vervollkommnet. Maßgebend ist hierbei vor allem das Ausmaß der Relativbewegungen zwischen den Enden der miteinander gekuppelten Fahrzeuge, weil, wie erwähnt, durch diese Bewegungen einerseits nicht die Wirkung der Übergangsschutzeinrichtung aufgehoben werden soll, andererseits die Übergangsschutzeinrichtung die Realtivbewegungen zwischen den Fahrzeugen nicht zu sehr beeinträchtigen soll Wulstverbindungen werden heute überwiegend bei Schienenfahrzeugen angewendet und dort ist der früher auch dort allgemein übliche Faltenbalg nahezu gänzlich verschwunden. Faltenbälge werden heute überwiegend bei Gelenkomnibussen und ähnlichen Straßenfahrzeugen angewendet.

Bekannt ist auch ein doppelwandiger Übergangsschutz für gelenkig miteinander verbundene Wagen, insbesondere Schienenfahrzeuge, bei denn eine der Außenkontur der Wagen folgenden, ringsumlaufende Wand und eine die Durchgangsöffnung in großer Nähe umschließende, ringsumlaufende Wand jeweils aus mehreren aufeinanderfolgenden röhrenförmigen Wülsten besteht (AT—B—346 899). Jeder Wulst hat einen Querschnitt in der Form eines ebenen, geraden Abschnittes, an den sich ein etwa halbkreisförmiger Abschnitt anschließt. Die ebenen Abschnitte der der Wagenaußenkontur folgenden Wand liegen außen, die ebenen Abschnitte der die Durchgangsöffnung nahe umschließenden Wand liegen innen, d.h. sind dem Durchgang zugekehrt. Alle ebenen Abschnitte sind mit einem Längsschlitz versehen, um die Wulstinnenräume mit der Wulstumgebung zu verbinden. Die Kontur des Wülste ändert sich über den Umfang des übergangsschutzes nicht. Ferner ist auch noch ein Übergangsschutz in der Form eines Faltenbalges bekannt, bei dem nicht Faltenbalgbahnen zickzackförmig aufeinanderfolgen und unter einem verwänderlichen Winkel aufeinanderstoßen, sondern der Faltenbalg von aufeinanderfolgenden, nach dem Balginneren hin offenen, etwa halbkreisförmigen Rinnen gebildet wird (DE—A—3 019 896). Auch hier ändert sich die Kontur über den Balgumfang nicht.

Bei Faltenbälgen ist es bereits bekannt, dem Umstand Rechnung zu tragen, daß es Bereiche gibt, in denen ein besonders großes Dehnverhalten verlangt wird, dort aber die Dehnfähigkeit von Haus aus besonders gering ist. Dies ist insbesondere der Fall in den Übergangsbereichen zwischen dem Dach und den Seitenwänden des Faltenbalgtunnels. Dort ist der Balg in besonderem Maße formsteif. Ein eingeschränktes Dehnvermögen in diesem Bereich beeinträchtigt die Dehnfähigkeit des Balges in seiner Gesamtheit oder der Balg wird in diesen Bereichen übermäßig beansprucht und wird vorzeitig zerstört. Um diesem Umstand Rechnung zu tragen, ist es bereits bekannt, in den genannten Übergangsbereichen die Wände der Falten nochmals in sich zu falten, um die Materialreserve bereitzustellen, die für eine zusätzliche Behnfähigkeit notwendig ist. Es sind also in den Übergangsbereichen zusätzliche Falten vorgesehen.

Bekannt ist es auch, dem Material in diesen Bereichen eine Elastizität in sich zu geben, was jedoch an sich systemfremd ist, weil ja bei Faltenbälgen die notwendige Nachgiebigkeit aus der Verformungsfähigkeit des Balges und nicht aus der elastischen Verformungsfähigkeit des Balgmateriales gewonnen werden soll.

Bei Wulstkonstruktionen fand dieses Problem bisher noch keine Beachtung. Das mag damit zusammenhängen, daß man, wie oben erwähnt, Bälge und Wülste als grundverschiedene Bauelemente ansieht und die beim Balg gegebene Gefahr der Überbeanspruchung beim Wulst nicht gegeben ist, indem bei einem solchen Betriebszustand die Wülste der beiden Tunnelabschnitte voneinander abheben bzw. aufeinander gleiten, also allenfalls eine Komfortverringerung bzw. Verschleißerhöhung in Kauf genommen werden müßte, nicht dagegen eine Zerstörung des Wulstes. Maßgebend mag auch sein, daß der Balg in Umfangsrichtung des Tunnels einstükkig ist, während beim Wulst drei selbständige Rohrabschnitte unter einem Winkel von jeweils 90° aufeinanderfolgen.

Im Zuge der immer größer werdenden Ansprüche an den Komfort erweisen sich jedoch die bisherigen Balg- und Wulstkonstruktionen unter Berücksichtigung der vorgenannten Problem als unzulänglich, und der Erfindung liegt die Aufgabe zugrunde, sowohl für die Balg- als auch für die Wulstkonstruktion eine Lösung zu finden, die eine Befestigung an den beiden aufeinanderfolgenden Fahrzeugen zuläßt, eine Überbeanspruchung jedoch ausschließt, jederzeit dichtes Schließen zwischen den gegebenenfalls vorgesehenen Tunnelabschnitten in allen Bereichen gewährleistet und die den Belangen von derartigen Übergangsschutzeinrichtungen in weiterer Ausgestaltung insoweit in besonderem Maße Rechnung trägt, als in den Seitenwänden die notwendige vertikale Steifigkeit, im Dach und gegebenenfalls dem Boden die Nachgiebigkeit vorliegt, die im Hinblick auf den seitlichen Versatz der Fahrzeuge gefordert werden muß.

Der Lösung der Aufgabe dienen die Merkmale des Kennzeichnungsteils des Anspruches 1 in Verbindung mit den Merkmalen des Gattungsbegriffes.

Die Merkmale der Unteransprüche sind zweckmäßige Ausgesaltungen der Erfindung.

Die Erfindung wird nachfolgend anhand der Zeichnung näher erläutert. In der Zeichnung zeigen.

Fig. 1 die Gesamtanordnung in der Draufsicht auf eine Stirnseite eines der beiden miteinander gelenkig gekuppelten Fahrzeuge,

Fig. 2 einen Schnitt nach der Linie II—II in Fig. 1 bei einer Übergangsschutzeinrichtung vom Wulsttyp,

Fig. 3 einen Schnitt nach der Linie III in Fig. 1 ebenfalls bei einer Übergangsschutzeinrichtung vom Wulsttyp,

Fig. 4 den Wulstzuschnitt aus ebenem Wulstmaterial vor dem Zusammenfügen zum Wulst im Bereich des Schnittes II—II von Fig. 1,

Fig. 5 eine erfindungsgemäße Übergangsschutzeinrichtung vom Balgtyp als Horizontallängsschnitt durch eine Balgseitenwand,

Fig. 6 in einer Fig. 5 entsprechenden Darstellung eine erfindungsgemäße Übergangsschutzeinrichtung vom Balgtyp, wobei die Rinnenform im Querschnitt ein Dreieck, also eine abgewandelte Halbkreisform ist, während der entsprechenden Quer-Schnitt bei der Lösung gemäß Fig. 5 ein Halbkreis ist und

Fig. 7, 8 Möglichkeiten der Verbindung zwischen den beiden Rinnenfolgen, wenn die Rinnen nicht unmittelbar Rücken an Rücken aneinanderliegen.

In der Stirnwand des Wagenkastens 1 eines Schienenfahrzeuges ist eine durch eine Tür 2 verschließbare Öffnung 3 vorgesehen, durch die Personen auf eine Übergangsbrücke 4 gelangen können. Das Fahrzeug weist eine Kupplung 5 auf, um gelenkig mit einem entsprechenden Fahrzeug gekuppelt werden zu können.

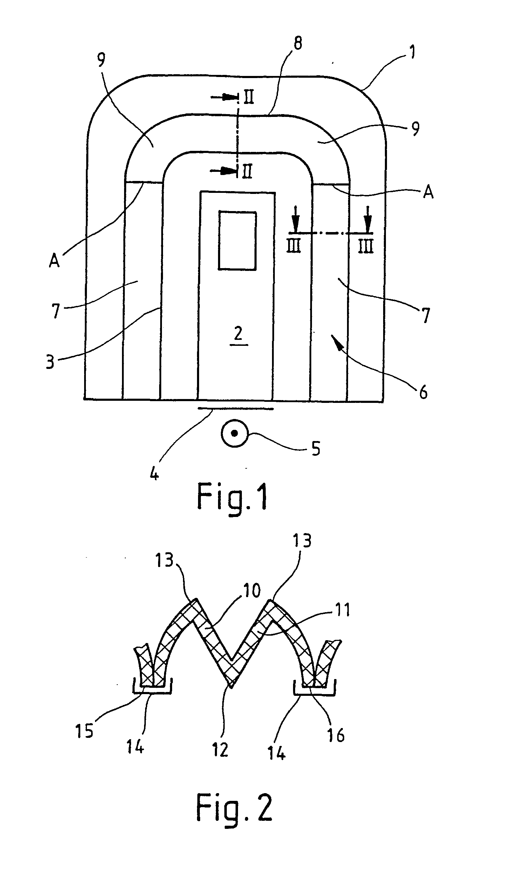

Um die Türöffnung herum ist eine Übergangsschutzeinrichtung 6 in der Form eines Wulstes oder eines Faltenbalges geführt und an der Wagenkastenstirnwand befestigt. Der Übergangsschutz besteht aus zwei vertikalen Seitenwänden 7, einem horizontalen Dach 8 und zwei bogenförmigen Übergangsabschnitten 9, die das Dach 8 an beiden Enden an das obere Ende je einer der Seitenwände 7 anschließen. In entsprechender Weise kann an die unteren Enden der Seitenwände noch ein Boden angefügt werden, so daß statt des tunnelförmigen ein röhrenförmiger Querschnitt der Übergangsschutzeinrichtung vorliegt. Der Boden liegt unterhalb der Übergangsbrücke 4. Im Bereich der Seitenwände (Schnitt III—III) hat der Wulst bei einer Übergangsschutzeinrichtung vom Wulsttyp den Querschnitt zumindest einer offenen Rinne, vorzugsweise dreier aufeinander folgender offenen Rinnen, wobei die offene Rinnenseite in das Tunnel- bzw. Röhreninnere gerichtet ist. Vom Beginn der Übergangsbogen 9 (Linie A) an ist die Rinnenwand nach innen eingeschlagen so daß der Wulst im Dachbereich den Querschnitt gemäß der Fig. 2 hat. Die Wandteile 10, 11 zwischen den Kanten 12, 13 stellen eine Materialreserve dar, die genutzt wird, wenn der Wulst zwischen zwei Fahrzeugstirnseiten befestigt ist und die Fahrzeuge infolge z.B. der Gleisführung in besonders großem Maße seitlich gegeneinander versetzt werden. Die im Bereich der Seitenwände untergebrachte Materialmenge bestimmt sich demgegenüber im wesentlichen aus der Abstandsänderung zwischen den Fahrzeugen in Fahrzeuglängsrichtung, indem sich der bei der Geradeausfahrt vorliegende, auf beiden Seiten gleiche Regelabstand auf der Kurveninnenseite verringert, so daß der Wulst zusammengedrückt wird, während er sich auf der Kurvenaußenseite vergroßert, so daß der Wulst gelängt wird.

Folgen, wie es vorzugsweise gedacht ist, mehrere Rinnen aufeinander, insbesondere drei solcher Rinnen im Seitenwandbereich, so wird jede Rinne aus einem Materialstreifen gebogen, und diese Materialstreifen sind an ihren Rändern durch Einfassungsschienen 14 mit U-förmigem Querschnitt miteinander verbunden. Jeder Materialstreifen besteht aus einem Gewebe, das mit Gummi oder gummiartigem Material beschichtet ist. Diese Material wird überlicherweise auch bei Faltenbälgen verwendet. Es ist biegbar, nicht aber in nennenswertem Maße elastisch dehnfähig.

Die Einfassungsschiene am einen Wulstende ist als Endrahmen ausgebildet, mit dem der Wulst an der einen Stirnseite des einen Fahrzeuges in geeigneter Weise befestigt werden kann. Die Einfassungsschiene am anderen Wulstende ist ebenfalls als Endrahmen ausgebildet, mit dem der Wulst an der entsprechenden Stirnseite des zweiten der miteinander gekuppelten Fahrzeuge in geeigneter Weise befestigt werden kann. Vorzugsweise ist jedoch an jeder Fahrzeugstirnseite ein Tunnel- bzw. Röhrenabschnitt mit seinem einen Endrahmen befestigt, und die beiden Tunnel- bzw. Röhrenabschnitte sind in der Mitte zwischen beiden Fahrzeugen mittels der anderen Endrahmen fest miteinander verbunden. Insoweit liegen dann Verhältnisse vor, wie sie von Faltenbälgen her bekannt sind, und die Verhältnisse weichen ab von den bekannten Wulstkonstruktionen, die aufeinanderliegen und bei entsprechenden Fahrzeugbewegungen aufeinander gleiten.

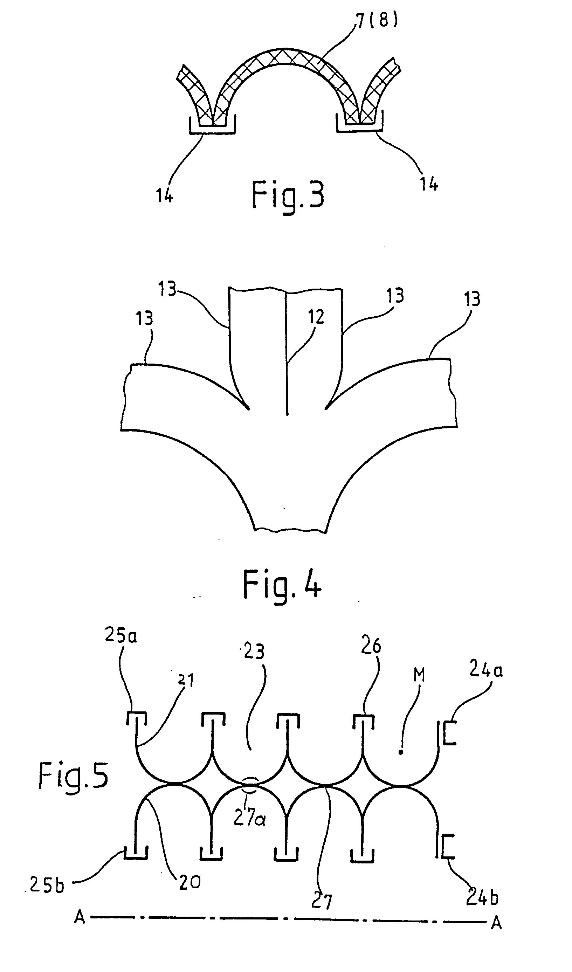

Für die Praxis hat es sich als zweckmäßig erwiesen, zwei Tunnel- bzw. Röhrenabschnitte vorzusehen, von denen jeder im Seitenwandbereich drei Rinnen bildet bzw. durch Rahmen aus drei Rinnen zusammengesetzt ist (Fig. 3), von denen wiederum jede im Dach- und gegebenenfalls Bodenbereich zu einer zusätzlichen Falte 10, 11, 12 gefaltet ist (Fig. 2). Liegen besondere Umstände vor, so können die Wülste statt der Form offener Rinnen geschlossene Kreisquerschnitte haben. Im Bereich der Seitenwülste ist der Querschnitt ein geschlossener Kreis. Im Bereich des Dachwulstes und gegebenenfalls des Bodenwulstes sind Materialreserven zweimal wie folgt vorgesehen.

Bei den offenen Rinnen (Fig. 2) sind die Rinnenenden 15, 16 in Rahmen bzw. Endrahmen gehalten und es bestehen etwa von der Mitte des von den Rinnenenden ausgehenden Halbkreises aus seitlich versetzten Kanten 13, von denen aus sich die Materialreserven zu einer Linie 12 innerhalb des Halbkreises keilförmig vereinen.

Der Zuschnitt, aus dem im Fall der Fig. 1—3 eine Wulstrinne gebildet wird, ist in Fig. 4 dargestellt.

Bie der Lösung von Faltebalgtyp gemäß Fig. 5 bilden zwei Balgbahnen 20, 21 jeweils eine Folge von in Balglängsrichtung aufeinanderfolgenden Rinnen 23 mit etwa halbkreisförmigem Querschnitt jeder einzelnen Rinne. Der Mittelpunkt eines der Kreisbögen ist mit M bezeichnet, so daß zu sehen ist, wie die seitlichen Wandteile der Rinnen etwas verlängert sind, um parallele Flächen zu schaffen, mit denen die einzelnen Rinnenwände aneinanderliegen. Notwendig ist dies jedoch nicht, und die Rinnen können im Querschnitt exakte Halbkreise bilden. Die Rinnen können aus einer einzigen, entsprechend verformten Materialbahn bestehen, die entsprechend gefaltet ist. Zweckmäßiger ist es jedoch, jede Rinne aus einem im ebenen Zustand entspannten Materialstreifen aus beschichtetem, vorzugsweise gummiertem Gewebe zu biegen und die so zu Rinnen geformten Streifen an ihren Rändern miteinander zu verbinden, so daß sie mit einer leichten Vorspannung elastisch verformt aneinanderliegen, wenn jede der Balgbahnen 20, 21 mit ihren Endrahmen 24a, 25a; 24b, 25b zwischen zwei miteinander gekoppelten Fahrzeugen eingebaut ist. Dabei erweisen sich dann Faltenbalgtyp und Wulsttyp im Zusammenhang mit der Erfindung als sehr ähnlich. Zur Verbindung der Materialstreifen an ihren Rändern miteinander dienen Rahmen 26, aus im Querschnitt U-förmigen Metall- vorzugsweise Aluminiumschienen. Zum Einbau sind die beiden Balgbahnen 20, 21 so aneinandergelegt, daß die Rinnen beider Balgbahnen mit ihren Rückenlinien 27 aneinanderliegen und miteinander verbunden sind. Die Verbindung kann durch Klebstoff, Nieten, Schrauben 27a, gegebenenfalls unter Zwischenschaltung von Klemmschienen erfolgen. Entsprechend können die Balgstreifen an ihren Rändern zusätzlich zu den Rahmen 26 oder statt mit den Rahmen 26 miteinander verklebt, verschweißt oder miteinander vernäht sein. Gegebenenfalls können alle Balgstreifen an ihren Rändern auf diese eine oder andere Weise miteinander verbunden sein, und lediglich einige Verbindungen können zur Versteifung des Balges in vertikaler Richtung gegebenenfalls zusätzlich unter Verwendung von Rahmen erfolgen.

Nachdem die Balgbahnen 20, 21 zu einer Einheit zusammengefaßt sind, kann der Einbau mittels eines Endrahmens erfolgen, wobei jeder Bahn an jedem Ende ein eigener Endrahmen 24a, 24b, bzw. 25a, 25b zugeordnet ist, oder die Balgbahnen können an ihren Enden zusammengeführt sein, und an jedem Balgende ist nur ein Endrahmen vorgesehen.

Statt der Endrahmen können auch andere, entsprechend wirkende Vorrichtungen vorgesehen sein. Beispielsweise können Schrauben direkt durch Löcher in der Balgwand hindurchgeführt und in die Fahrzeugstirnseiten eingeschraubt werden, so daß die Balgwand zwischen der Fahrzeugstirnseite und den Köpfen der Schrauben liegen.

Diese Balgausgestaltung vereinigt in sich den Vorteil einer uneingeschränkten großen Auszugsfähigkeit in seiner Längsrichtung und für den seitlichen Versatz mit dem Vorteil großer Stabilität gegen in Querrichtung wirkende Druck- und Sogkräfte, wie sie auftreten, wenn sich zwei mit hoher Geschwindigkeit fahrende Zuge insbesondere in einem Tunnel begegnen. Der erfindungsgemäße Balg gemäß Fig. 5 ist deshalb besonders für den Höchstgeschwindigkeitsverkehr bestimmt und geeignet.

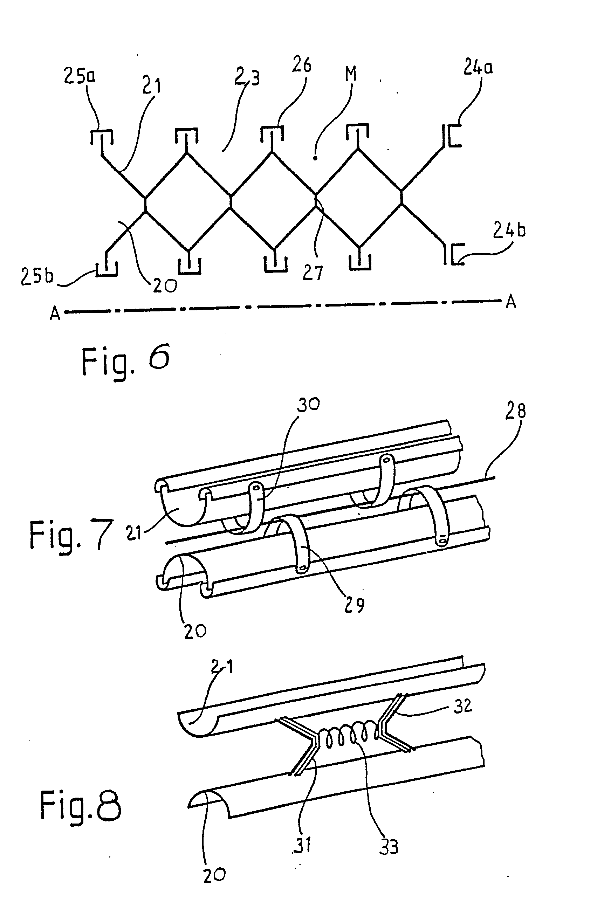

Die Lösung gemäß Fig. 6 unterscheidet sich von der Lösung gemäß Fig. 5 lediglich dadurch, daß die Rinnen im Querschnitt nur noch halbkreisförmige Grundform haben, exakter gesehen aber einen Querschnitt in der Form eines Dreieckes haben. Es finden gleiche Bezugszeichen Anwendung, und die Funktion ist dieselbe wie bei der Lösung gemäß Fig. 5 soweit dies für die Erfindung relevant ist.

Es ist nicht notwendig, daß die Falten an ihren Scheitellinien einander berühren und dort gegebenenfalls direkt miteinander verbunden sind. Gegebenenfalls können die Materialbahnen

auch im Bereich der Scheitellinien einen bestimmten Abstand voneinander haben und in dieser Stellung im Bereich der Scheitellinien zueinander fixiert sein.

Verbindungsmöglichkeiten im Fall eines Abstandes zwischen den beiden Balgbahnen 20, 21, sind in Fig. 7 und 8 dargestellt. Bei der Lösung nach Fig. 7 ist zwischen den beiden Balgbahnen ein Kabel 28 gespannt, in das Laschen 29, 30 eingehängt sind, die an beiden Balgbahnen befestigt sind. Bei der Lösung nach Fig. 8 sind auf den Balgbahnen Stoffstreifen 31, 32 z.B. aufgenäht, die durch eine Feder 33 miteinander verbunden sind.

**Patentansprüche**

1. Zumindest drei Wülste aufweisender Übergangsschutz für gelenkig miteinander verbundene Fahrzeuge, bei dem die zumindest drei Wülste entlang einer in ihrer Längsrichtung verlaufenden Mantellinie an der Stirnseite eines der beiden Fahrzeuge befestigt sind und entlang einer dieser Mantellinie gegenüberliegenden Mantellinie zum Zusammenwirken mit der entsprechenden Stirnseite des anderen der beiden Fahrzeuge bestimmt sind, so daß die Wülste mit einem horizontalen Dachwulst und zwei vertikalen Seitenwülsten sowie gegebenenfalls auch einem Bodenwulst Teile eines im Querschnitt tunnel- bzw. rohrförmigen Übergangsschutzes zwischen den beiden Fahrzeugen bilden, wobei jeder Wulst eine nach dem Inneren des Übergangsschutzes offene Rinne bildet, die zumindest etwa die Form eines Halbkreises hat, der bei allen drei bzw. vier Wülsten einen gleichen Halbmesser hat, dadurch gekennzeichnet, daß der Querschnitt der Wülste (8) im Dach- und gegebenenfalls Bodenbereich von der zumindest etwa halbkreisförmigen Grundkontur derart abweicht, daß zusätzlich zu dem für die Grundkontur notwendigen Wulstmaterial eine für die Deformation des Wulstes nutzbare zusätzliche Materialreserve (10, 11) gegeben ist.

2. Übergangsschutz nach Anspruch 1, dadurch gekennzeichnet, daß sich die zusätzliche Materialreserve zweiteilig von beiderseits der zwischen dden vorerwähnten Manteillinien mittig liegenden Scheitellinie des Halbkreises liegenden Längslinien (13) auf zu einer gemeinsamen Längslinie (12) innerhalb des Halbkreises erstreckt.

3. Übergangsschutz nach Anspruch 2, dadurch gekennzeichnet, daß die Seitenwülste (7) an ihren oberen Enden und gegebenenfalls ihren unteren Enden mit Übergangsbögen (9) an den Dachwulst (8) und gegebenenfalls den Bodenwulst angeschlossen sind wobei die Übergangsbögen zwischen dem Querschnitt der Seitenwülste und dem Querschnitt des Dach- und gegebenenfalls des Bodenwulstes vermitteln.

4. Übergangsschutz nach Anspruch 3, dadurch gekennzeichnet, daß mehrere aus Seitenwülsten (7), Dachwulst (8) und gegebenenfalls Bodenwulst sowie den Übergangsbögen (9) gebildete Rohr- bzw. Tunnelabschnitte hintereinander angeordnet und miteinander verbunden sind, so daß der Übergangsschutz zwischen zwei Fahrzeugen aus mehreren, hintereinander liegenden Rohr- bzw. Tunnelabschnitten gebildet wird.

5. Übergangsschutz nach Anspruch 4, dadurch gekennzeichnet, daß die Rohr- bzw. Tunnelabschnitte durch in Umfangsrichtung verlaufende, im Querschnitt vorzugsweise U-förmige Rahmen (14) miteinander verbunden sind.

6. Übergangsschutz nach Anspruch 5, dadurch gekennzeichnet, daß die Rahmen (14) an den Enden des aus mehreren Abschnitten zusammengesetzten Rohres bzw. Tunnels als Endrahmen ausgebildet sind mit Befestigungsmöglichkeiten an den zugeordneten Stirnseiten der beiden miteinander gekuppelten Fahrzeuge.

7. Übergangsschutz nach Anspruch 5, dadurch gekennzeichnet, daß die Rahmen an den Enden des aus mehreren Abschnitten zusammengesetzten Rohres bzw. Tunnels als Endrahmen ausgebildet sind, wobei ein Endrahmen Befestigungsmöglichkeiten für die Befestigung an einer der zugehörigen Stirnseiten der beiden miteinander gekuppelten Fahrzeuge, der andere Endrahmen Befestigungsmöglichkeiten zum Verbinden dieses Endrahmens mit dem entsprechenden Endrahmen des an der anderen der zugehörigen Stirnseiten der beiden miteinander gekuppelten Fahrzeuge befestigten Rohr- bzw. Tunnelabschnittes aufweist.

8. Übergangsschutz nach Anspruch 7, dadurch gekennzeichnet, daß der jedem der beiden miteinander gekuppelten Fahrzeuge zugehörige Rohr- bzw. Tunnelabschnitt seinerseits aus drei aufeinander folgenden Rohr- bzw. Tunnelabschnitten besteht.

9. Übergangsschutz nach Anspruch 1, dadurch gekennzeichnet, daß an der äußeren Scheitellinie des nach dem Inneren des Übergangsschutzes offenen Halbkreises ein entsprechendes, jedoch nach außen offenes Halbkreisprofil mit seiner entsprechenden Scheitellinie angesetzt ist, so daß die eine Rinne mit ihren Rändern nach dem Bereich außerhalb, die andere Rinne mit ihren Rändern nach dem Bereich innerhalb des Übergangsschutzes weist, und bei mehreren aufeinanderfolgenden Wülsten die Ränder der Rinnen der einen Wülste mit den entsprechenden Rändern der nächstfolgenden, bzw. -ausgenommen bei den mit Endbefestigungsmitteln (4, 5) verbundenen Wülsten—mit dem unmittelbar vorausgehenden Wulst verbunden sind.

10. Übergangsschutz nach Anspruch 9, dadurch gekennzeichnet, daß der Rinnenquerschnitt etwa die Form eines Dreieckes hat.

11. Übergangsschutz nach einem der Ansprüche 9 und 10, gekennzeichnet, durch die Verwendung von beschichtetem, vorzugsweise gummiertem Gewebe als Wulstmaterial.

12. Übergangsschutz nach einem der Ansprüche 9 bis 10, dadurch gekennzeichnet, daß zwei Materialbahnen (1, 2) zu einer Anzahl von Falten geformt und danach die beiden Materialbahnen zu einem Faltenbalg miteinander verbunden sind.

13. Übergangsschutz nach einem der Ansprüche 9 bis 12, dadurch gekennzeichnet, daß die beiden Rinnen an den Scheitellinien ohne direkte Berührung miteinander verbunden sind.

**Revendications**

1. Dispositif de protection de passage d'intercommunication comportant au moins trois boudins et destiné à des véhicules couplés entre-eux de manière articulée, lesdits au moins trois boudins étant fixés, le long d'une de leur génératrice longitudinale, sur la face frontale d'un des deux véhicules, la génératrice longitudinale opposée étant destinée à coopérer avec la face frontale correspondante de l'autre des deux véhicules, de telle sorte que les boudins constituent, avec un boudin de toit et deux boudins latéraux verticaux, ainsi que, le cas échéant, avec un boudin de sol, les parties d'un dispositif de protection de passage d'intercommunication de section en forme de tunnel ou de canal tubulaire, chacune des boudins constituant une goulotte ouverte en direction de l'intérieur du passage d'intercommunication et ayant une forme au moins sensiblement en demi-cercle qui présente le même demi-diamètre pour les trois ou les quatre boudins, caractérisé en ce que la section des boudins (8) dans la zone de toit et le cas échéant dans la zone de sol, diffère de la forme générale en demi-cercle, de sorte que soit constituée, en supplément au matériau nécessité par la forme générale de la section, une réserve de matériau supplémentaire pouvant être utilisée pour la déformation du boudin.

2. Dispositif de protection de passage d'intercommunication selon la revendication 1, caractérisé en ce que la réserve de matériau supplémentaire s'étend en deux parties, vers l'intérieur du demi-cercle, à partir de deux lignes longitudinales (13) situées de chaque côté de la ligne de crête du demi-cercle, elle-même située au centre entre les génératrices mentionnées précédemment, les deux parties se réunissant le long d'une ligne commune (12).

3. Dispositif de protection de passage d'intercommunication selon la revendication 2, caractérisé en ce que les boudins latéraux (7) sont raccordés, par l'intermédiaire de tronçons courbes de raccordement (9), au niveau de leurs extrémités supérieures et, le cas échéant leurs extrémités inférieures, au boudin de toit (8), et le cas échéant, au boudin de sol, ces tronçons courbes de raccordement permettant la transition entre la section des boudins latéraux et la section du boudin de toit, le cas échéant, du boudin de sol.

4. Dispositif de protection de passage d'intercommunication selon la revendication 3, caractérisé en que plusieurs tronçon de tunnel ou de canal constitués de boudins latéraux (7), d'un boudin de toit (8) et éventuellement d'un boudin de sol, ainsi que des tronçons courbes de raccordement (9), sont avencés les uns à la suite des autres eh sont reliés entre-eux, de sorte que le dispositif de protection de passage d'intercommunication entre deux véhicules, soit constitué par plusieurs tronçons de tunnel ou de canal qui se succèdent.

5. Dispositif de protection de passage d'intercommunication selon la revendication 4, caractérisé en ce que les tronçons de tunnel ou de canal sont reliés entre-eux au moyen de cadres (14) dont la section présente de préférence une forme de "U".

6. Dispositif de protection de passage d'intercommunication selon la revendication 5, caractérisé en ce que les cadres (14), aux extrémités du canal ou tunnel constitué par plusieurs tronçons, sont réalisés sous la forme de cadres d'extrémité comportant des possibilités de fixation sur les parois frontales associées des deux véhicules couplés entre-eux.

7. Dispositif de protection de passage d'intercommunication selon la revendication 5, caractérisé en ce que les cadres, aux extrémités du canal ou tunnel constitué par plusieurs tronçons, sont réalisés sous la forme de cadres d'extrémité, l'un des cadres d'extrémité comportant des possibilités de fixation sur l'une des faces frontales considérées des deux véhicules couplés, tandis que l'autre cadre d'extrémité comporte des possibilités de fixation permettant de le relier au cadre d'extrémité correspondant du tronçon de canal ou de tunnel fixé sur l'autre face frontale considérée des deux véhicules couplés.

8. Dispositif de protection de passage d'intercommunication selon la revendication 7, caractérisé en ce que chaque tronçon associé à chacun des deux véhicules couplés entre-eux, est pour sa part constitué d'une suite de trois tronçons de canal ou de tunnel.

9. Dispositif de protection de passage d'intercommunication selon la revendication 1, caractérisé en ce que sur la ligne de crête extérieure du demi-cercle ouvert vers l'intérieur du passage d'intercommunication, est appliqué avec sa ligne de crête correspondante, un profilé en demi-cercle correspondant, qui est toutefois ouvert vers l'extérieur du passage d'intercommunication, l'une des goulottes étant donc tournée, avec ses bords vers l'extérieur du passage d'intercommunication, tandis que l'autre goulotte est tournée avec ses bords vers l'intérieur dudit passage, et en ce que dans le cas de plusieurs boudins successifs, les bords de l'un des boudins sont reliés aux bords correspondants du boudin qui lui succède directement ou qui le précède immédiatement, à l'exclusion des boudins pourvus de moyens de fixation d'extrémité.

10. Dispositif de protection de passage d'intercommunication selon la revendication 9, caractérisé en ce que la section de la goulotte présente une forme sensiblement triangulaire.

11. Dispositif de protection de passage d'intercommunication selon l'une des revendications 9 et 10, caractérisé par l'utilisation d'un tissu revêtu, notamment par du caoutchouc, en guise de matériau constitutif des boudins.

12. Dispositif de protection de passage d'intercommunication selon l'une des revendications 9 à 11, caractérisé en ce que deux nappes de matériau (20, 21) sont mises en forme pour constituer une série de plis, puis sont assemblées entre-elles pour constituer un soufflet.

13. Dispositif de protection de passage d'intercommunication selon l'une des revendications 9 à 12, caractérisé en ce que les deux goulottes sont reliées entre-elles au niveau des lignes de crête, sans contact direct.

**Claims**

1. Passage protection for articulated vehicles, the protection having at least three flexible tubular members called beads which are secured along a longitudinal generatrix to the end face of one of the two vehicles and are adapted to co-operate along a generatrix opposite the first-mentioned generatrix with the corresponding end face of the other of the two vehicles so that by means of a horizontal roof bead and two vertical side beads and possibly a floor bead the beads form parts of a tunnel-like or tubular cross-section passage protection between the two vehicles, each bead forming a trough open towards the inside of the protection, such trough having at least substantially the shape of a semicircle having the same radius in all of the three or four beads, characterised in that the cross-section of the beads (8) in the roof and possibly floor zone so varies from the at least substantially semicircular basic contour that in addition to the material required therefor additional spare material (10, 11) usable for deformation of the bead exists.

2. A protection according to claim 1, characterised in that the additional spare material extends in two parts from longitudinal lines (13) which are disposed on either side of the semicircle apex line disposed centrally between the generatrices, to a common longitudinal line (12) in the semicircle.

3. A protection according to claim 2, characterised in that the side beads (7) are secured at their top ends and possibly at their bottom ends by way of transition bends (9) to the roof bead (9) and possibly the floor bead, such bends providing adaptation between the cross-section of the side beads and the cross-section of the roof and possibly floor beads.

4. A protection according to claim 3, characterised in that a number of tubular or tunnel sections embodied by side beads (7), a roof bead (8), possibly a floor bead and the transition bends (9) are disposed one after another and interconnected so that the protection between two vehicles comprises a number of consecutive tubular or tunnel sections.

5. A protection according to claim 4, characterised in that the tubular or tunnel sections are interconnected by peripherally extending preferably channel-section frames (14).

6. A protection according to claim 5, characterised in that the frames (14) at the ends of the multi-section tube or tunnel are in the form of end frames and have provision for securing to the associated end faces of the two coupled-together vehicles.

7. A protection according to claim 5, characterised in that the frames at the ends of the multi-tube tube or tunnel are in the form of end frames, one end frame having provision for being secured to one of the associated end faces of the two coupled together vehicles while the other end frame has provision for connection to the corresponding end frame of the tubular or tunnel section secured to the other of the associated end faces of the two coupled-together vehicles.

8. A protection according to claim 7, characterised in that the tubular or tunnel section associated with each of the two coupled-together vehicles in in turn embodied by three consecutive such sections.

9. A protection according to claim 1, characterised in that a corresponding but outwardly open semicircular profile has its corresponding apex line disposed on the outer apex line of the semicircle open towards the inside of the protection so that one trough has its edges extending towards the zone outside the protection and the other trough has its edges extending towards the zone inside the protection, and if there are a number of consecutive beads the edges of the troughs of any one bead are connected to the corresponding edges of the immediately following or—except for the beads secured by end securing means (4, 5)— to the immediately preceding bead.

10. A protection according to claim 9, characterised in that the trough cross-section is in shape substantially triangular.

11. A protection according to any of claims 9 and 10, characterised by the use of coated and preferably rubberised woven fabric as bead material.

12. A protection according to any of claims 9—11, characterised in that two material webs (1, 2) are shaped to form a number of folds whereafter the two webs are interconnected to form a bellows structure.

13. A protection according to any of claims 9—12, characterised in that the two troughs are interconnected by way of the apex lines without direct contact.

Fig.1

Fig.2

Fig.3

Fig.4

Fig.5

2

Fig. 6

Fig. 7

Fig.8